# EUROPEAN PATENT SPECIFICATION

(11) **EP 3 766 054 B1**
(45) Date of publication and mention of the grant of the patent: **27.04.2022**
(21) Application number: 19721029.7
(22) Date of filing: 15.03.2019
(51) Int. Cl.: G08B 17/103, F16M 11/18, G02B 7/00, G08B 29/20, G08B 17/113

(54) **INFRARED SMOKE DETECTOR AND ALIGNMENT METHOD THEREOF**
INFRAROT-RAUCHDETEKTOR UND AUSRICHTUNGSVERFAHREN DAFÜR
DÉTECTEUR INFRAROUGE DE FUMÉE ET SON PROCÉDÉ D'ALIGNEMENT

(30) Priority: 15.03.2018 IT 201800003638
(43) Date of publication of application: 20.01.2021
(73) Proprietor: Tecnoalarm S.r.l., 10099 San Mauro Torinese (TO) (IT)
(72) Inventor: TRUCCHI, Luciano, 10099 San Mauro Torinese (TO) (IT); NEGRO, Giovanni, 10099 San Mauro Torinese (TO) (IT)
(74) Representative: Robba, Pierpaolo
(86) International application number: PCT/IB2019/052110
(87) International publication number: WO 2019/175842

(56) References cited:
- EP-A1- 3 258 452
- WO-A1-2006/050570
- US-A1- 2004 155 786
- US-A1- 2010 044 549

## Description

### Technical Field

This invention relates to smoke detectors employing optical radiations, in particular infrared radiations, and more specifically it concerns a smoke detector intended for use in large environments as well as a method for aligning the same.

### Prior Art

Infrared smoke detectors intended for use in large environments or buildings, such as warehouses, garages, stables and the like, are generally made up of an infrared radiation emitter and a receiver that receives the radiation coming from the emitter after said radiation has passed through at least a part of the monitored environment. In general, these detectors are made in two configurations. In a first configuration, a local unit containing the emitter and a remote unit containing the receiver are provided. In a second configuration, a local unit containing the emitter and the receiver and a remote unit containing a reflecting element (retro-reflector) arranged to receive the radiation coming from the emitter and to reflect it towards the receiver are provided. Examples of detectors made in both configurations are described in EP3258452 A1, US2004/155786 A1, US2010/044549 A1, WO2006/050570 A1, GB 2414549 A and in WO 2006/123129 A2. The emitter and the receiver may also have a distributed structure and consist of a plurality of elements, as described in the second document.

Irrespective of the configuration, under normal conditions (i.e. in the absence of smoke), the infrared radiation that reaches the receiver, possibly after having been reflected by the retro-reflector, will have a certain intensity, substantially corresponding to the intensity of the transmitted radiation. When a fire occurs with consequent development of smoke, the radiation emitted by the emitter or the radiation reflected by the possible retro-reflector no longer reaches the receiver or reaches it in a strongly attenuated manner. In these conditions an alarm, commonly a sound and/or light alarm, is activated.

In order for the detector to work properly, the emitter, the retro-reflector, if present, and the receiver must be aligned with one other, so that, in the absence of smoke, the radiation emitted by the emitter reaches the receiver. The alignment operation must be carried out not only upon installation, but also during the life of the building in which the detector is installed. In fact, over time, the building may undergo settling or movements which, given the large distance between the local unit and the remote unit, can give rise to misalignments of the various components.

The alignment operation is commonly carried out by motorized systems which modify the position or orientation of one or more of the components, as described for example in the documents mentioned above. The use of motorized systems allows remote control of the operation: this is particularly advantageous considering that the local unit and the remote unit are mounted at a considerable distance from the ground, typically near the ceiling of the building, so that manual interventions would require special equipment, such as ladders or scaffolding, to reach the components to be aligned and would therefore be difficult to perform.

The solutions most commonly used for alignment exploit the same infrared radiation used for the detection, as described for example in the cited documents, and are based, for the recognition of a misalignment, on the variation of the intensity of the radiation that reaches the receiver. Once the variation is recognized, the motorized alignment system is operated to move the emitter and/or receiver until a desired intensity is again obtained for the received radiation. The alignment operation can be controlled by an operator, or it can be performed automatically by control bodies.

A problem that arises is to ensure good alignment accuracy. It is easy to get good precision during alignment upon installation, when the environment in which the detector is installed is empty. In the case of periodic alignments during the life of the building, the transmission of infrared radiation is disturbed by spurious reflections on objects present in the monitored environment, especially if the passage for the radiation is reduced. This happens frequently in an industrial warehouse, when there are shelves that come close to the ceiling, or in a garage, where the space between the ceiling and the roof of the cars is limited. These spurious reflections do not affect the ability to detect smoke, but can instead hinder the recognition of a misalignment between the detector components and their precise realignment.

In order to improve the accuracy of the alignment, WO 2006/123129 A2 proposes an alignment method with two steps, in the first of which (manual or coarse alignment step), a beam of a visible radiation is used, concentric to the infrared radiation beam, to allow a visual check of the trajectory of the radiation, whereas in the second step (automatic alignment step) only the infrared radiation is used and the intensity of the radiation received is analyzed to bring the components of the detector to the position for which the maximum intensity is obtained. This solution is very cumbersome and relatively expensive, because of the use of a laser.

JPH0862135 proposes an alignment system in which each of the two units comprises a laser mounted on a turntable and a target to receive the laser beam transmitted by the laser of the other unit. This structure, too, is remarkably complex and expensive.

### Disclosure of the Invention

The object of the invention is to provide a smoke detector and a method for aligning the same which obviate prior art drawbacks.

In a first aspect of the invention, a smoke detector is provided comprising a first optical emitter adapted to generate a first focused beam of optical radiations, and an optical receiver arranged so as to receive the first beam of optical radiations, which has propagated within an environment in which the detector is arranged and has been reflected by a reflecting element, and wherein the first optical emitter and the optical receiver belong to a local unit which further comprises a motorized aligning system controlled by a control system and adapted to act onto the first optical emitter and/or onto the optical receiver in order to adjust the alignment between the first optical emitter, the optical receiver and the reflecting element and guarantee optimum optical reception, by the optical receiver, of the beam reflected by the reflecting element, and wherein the reflecting element belongs to a remote unit.

According to one feature of the invention, the local unit further comprises a first radio device acting at least as transmitter for generating an aligning radio signal and sending the same towards the remote unit, and the remote unit further comprises a second radio device acting at least as receiver and adapted to receive the radio signal transmitted by the first radio device, and a second optical emitter, adapted to generate a second focused beam of optical radiations and sending the same towards the optical receiver when the second radio device receives the radio signal transmitted by the first radio device. The control system is adapted to determine the intensity of the second radiation beam received by the optical receiver and to activate the motorized aligning system when said intensity falls below a threshold indicative of a misalignment between the first optical emitter, the optical receiver and the reflecting element.

Advantageously, the second radio device and the second optical emitter are batteryfed.

Preferably, then, the first and the second radio device have both a transmitting function and a receiving function, and the second radio device is arranged to periodically send information about the battery charge status to the first radio device.

In a second aspect of the invention, a method for aligning the components of a smoke detector of the aforementioned type is provided, comprising the steps of:
- installing, within the local unit, a first radio device having at least a transmitting function, in order to generate an aligning radio signal and sending the same to the remote unit;
- installing, within the remote unit, a second radio device having at least a receiving function and adapted to receive the radio signal transmitted by the first radio device, and a second optical emitter;
and further comprising, in an initial step of alignment of said components, the steps of:
- actuating the first and the second radio devices and the optical receiver while maintaining the first and the second optical emitters in a non-activated state;
- sending an aligning radio signal from the first radio device to the second radio device;
- activating the second optical emitter upon reception, by the second radio device, of the aligning radio signal;
- sending a second focused beam of radiations from the second optical emitter to the optical receiver;
- determining the intensity of the second beam of radiations received by the optical receiver; and
- when said intensity falls below a threshold indicative of a misalignment between the first optical emitter, the optical receiver and the reflecting element, activating the motorized aligning system in order to modify the position of at least one among the first optical emitter and the optical receiver so as to bring said intensity back to a value above said threshold.

At the end of the initial aligning step, after having brought said intensity back to a value above the threshold, the method comprises the steps of
- activating the first optical emitter and deactivating the second optical emitter in order to switch to a standard operation of detecting the presence of smoke, and
- during the standard operation, periodically repeating the steps of sending the aligning radio signal, activating the second radio receiver and the second optical emitter, sending the second beam of radiations to the receiver, determining the intensity of the second beam of radiations and activating, where appropriate, the alignment system in the event of misalignment.

### Brief Description of the Figures

These and other features and advantages of the present invention will become clear from the following description of preferred embodiments given by way of non-limiting example with reference to the attached drawings, in which:
- Fig. 1 is a schematic view of a building in which the smoke detector according to the invention is mounted;
- Fig. 2 is a flow chart of the procedure for aligning the components of a smoke detector according to the invention.

### Description of Preferred Embodiments

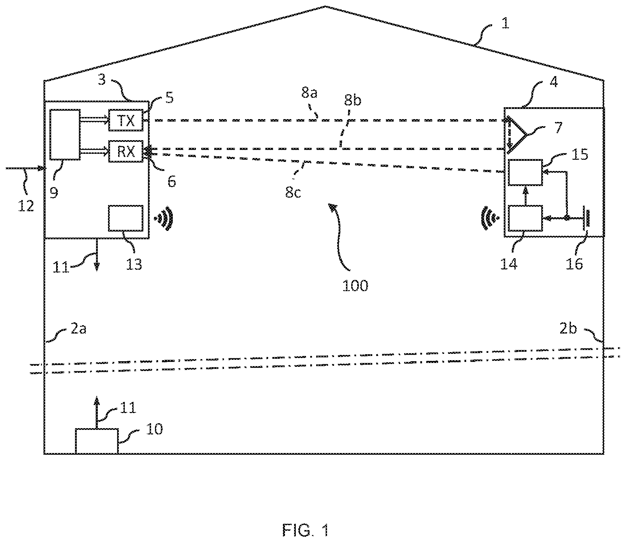

Referring to Fig. 1, a building 1, for example an industrial warehouse, a garage, a stable or the like, is illustrated, in which, on two opposite inner walls 2a, 2b, the local unit 3 and the remote unit 4 of a smoke detector 100 according to the invention are mounted.

The following description illustrates a detector 100 having a reflection configuration, so that the local unit 3 comprises an emitter 5 and a receiver 6 of infrared radiations, and the remote unit 4 comprises a reflecting element (retro-reflector) 7 suitable for receiving a radiation beam 8a emitted by the emitter 5 and reflecting it towards the receiver 6. For example, the emitter 5 comprises an infrared diode able to emit a focused radiation beam, and the receiver 6 comprises a photodiode able to generate an electrical signal when illuminated by the reflected beam 8b. These devices are well known in the art and widely available on the market. The retro-reflector 7 can be, for example, a prism reflector. The local unit 3 and the remote unit 4 are mounted on the respective walls 2a, 2b in relative positions such that the beam 8a emitted by the emitter 5 reaches the reflector 7 and the beam 8b reflected by the reflector 7 is picked up by the receiver 6.

At least one out of the emitter 5 and the receiver 6 is mounted on a support (not shown) that can be displaced, in particular rotated about a horizontal axis and a vertical axis, to align the emitter 5, the receiver 6 and the reflector 7 with one another upon installation of the detector 100, or to realign them, if necessary, during the life of the building 1, so as to ensure the desired direction of propagation of the beams 8a, 8b. The displacement is advantageously obtained by means of a motorized alignment system 9 which comprises, for example, one or more electric motors and is driven by a control system 10 on the basis of the intensity of the beam 8b received by the receiver 6. In the drawing, it has been assumed that the alignment system 9 acts on the receiver 6 and emitter 5. . The way in which the control system 10 receives information on the intensity of the beam 8b, recognizes the need for alignment or realignment of the components of the detector 100 and sends the necessary commands to the alignment system 9 is entirely conventional. Examples of assembly of optical components which allows orientation thereof by means of a motorized system are described in GB 2414549 A and WO 2006/123129 A2, already mentioned, and in GB 2490893 A. The communication between the local unit 3 and the control system 10 necessary for aligning the components of the detector 100 is schematically indicated by the arrows 11. The arrow 12 indicates the connection of the local unit 3 to an electric network for powering the components of the unit.

According to the invention, to obtain a precise and lasting alignment between the components of the detector 100, a first radio transceiver device 13 is provided in the local unit 3, and in the local unit 4 there are provided a radio device 14 acting at least as a receiver in order to receive the radio signals coming from the device 13, and a second infrared radiation emitter 15 adapted to send a second beam 8c of infrared radiations to the receiver 6 of the local unit 3 upon command by the device 14, when this receives a radio signal from the device 13 of the local unit 3. Like the beam 8a emitted by the emitter 5, also the radiation beam 8c emitted by the emitter 15 will be a focused beam. The radio device 13 of the local unit 3, too, is powered by a network, like the other components of the unit. Instead, as will also appear from the following description, the radio device 14, and consequently the emitter 15 which intervenes upon command by this device, are activated periodically, and therefore can be powered by batteries, indicated as a whole by 16. Management systems of semipassive devices in general, which are not connected to an electrical network and are activated periodically to save energy, are well known in the art.

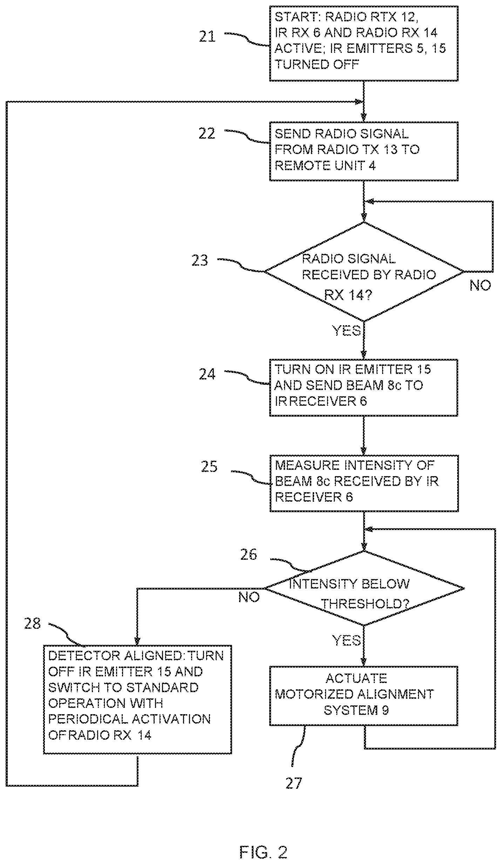

The method for aligning the components of the detector 100 according to the invention will now be described, also referring to the flow diagram of Fig. 2.

Considering the initial alignment at the time of installation of the detector 100 in the building 1, in the local unit 3 the radio device 13 turns on and the IR receiver 6 is activated. The local and remote IR emitters 5 and 15 are off (step 21). The radio device 13 starts to emit a radio signal (step 22). The radio device 14 of the remote unit 4, which is activated periodically (for example, every 30 seconds), will receive sooner or later the radio signal emitted by the device 13 (step 23, output SI) and, when receiving it, activates the IR emitter 15, which sends the beam 8c towards the local unit 3 (step 24).

In the local unit 3, the beam 8c is received and processed by the IR receiver 6 and its intensity is measured (step 25). If this intensity is below the threshold established for the alignment to be considered correct (step 26, output SI), as will normally happen at the time of installation, the control system 10 actuates the alignment system 9 (step 27) to correctly orient the receiver 6. Correct alignment is recognized by the fact that the intensity of the beam 8c has returned above the threshold.

When the correct alignment has been obtained (step 26, output NO), the emitter 15 turns off and conventional operation begins (step 28). The local unit 3 then activates its own IR emitter 5 which sends the beam 8a to the remote unit 4, where the retro-reflector 7 reflects it, thus forming the beam 8b which will be received and processed by the IR detector 6. When the presence of smoke is recognized (for example, because the intensity of the beam 8b has fallen below a second threshold), the alarm signal will be generated, as in conventional detectors.

According to the invention, even during standard operation the radio device 13 of the local unit 3 is kept active and the radio device 14 of the remote unit 4 continues to turn on periodically, waiting for any radio signals coming from the device 13. For the purpose of alignment, the process then returns to step 22. The only occasional turning on of the device 14 allows to save electricity and therefore eliminates the need to replace frequently the batteries in the remote unit which, as mentioned, is practically inaccessible without the use of stairs or scaffolding.

It is clear that what has been described has been given only by way of non-limiting example, and that the details of construction and the embodiments may be widely varied with respect to what has been described and illustrated, without thereby departing from the scope of the present invention as defined by the following claims.

For example, in a variant, the radio device 14 of the remote unit 4, too, is a transceiver device and its transmitting module serves to transmit control signals, such as for example the state of charge of the battery 16. This variant may even represent the preferred solution, given the little cost difference between a radio transceiver and a simple receiver.

In a further variant, in which the remote unit 4 has only the receiver, it could be hypothesized to interrogate the remote unit 4 with a radio signal sent from the local unit 3 by radio, and to use the IR emitter 15 of the remote unit for sending an optical signal containing the status of the battery: for example, the remote IR emitter 15 could be activated at intervals inversely proportional to the charge. However, this variant is practically only theoretical, since, as stated above, there is no substantial economic convenience in using an only receiving radio device.

Moreover, the invention has been described with reference to a reflection configuration, in which the local unit 3 comprises both an emitter 5 and a receiver 6 and in the remote unit 4 there is provided a retro-reflector 7 which reflects towards the receiver 6 the beam coming from the emitter 5. However, a realisation, not being part of the present invention, of a system with direct (end-to-end) configuration, in which the IR receiver 6 is arranged in the remote unit 4 is also conceivable.

Again, even if reference has been made to an infrared detector, other types of optical radiations could also be used.

## Claims

1. Smoke detector (100) employing optical radiations and comprising a first optical emitter (5) adapted to generate a first focused beam of optical radiations (8a) and an optical receiver (6) arranged so as to receive the first beam of optical radiations (8a, 8b), which has propagated within an environment (1) in which the detector (100) is arranged, and has been reflected by a reflecting element (7), wherein the first optical emitter (5) and the optical receiver (6) belong to a local unit (3) which further comprises a motorized aligning system (9) controlled by a control system (10) and adapted to act onto the first optical emitter (5) and/or onto the optical receiver (6) in order to adjust the alignment between the first optical emitter (5), the optical receiver (6) and the reflecting element (7) and guarantee optimum optical reception, by the optical receiver (6), of the beam (8b) reflected by the reflecting element (7), and wherein the reflecting element (7) belongs to a remote unit (4), **characterized in that** the local unit (3) further comprises a first radio device (13) acting at least as transmitter for generating an aligning radio signal and sending the same towards the remote unit (4), and the remote unit (4) further comprises:
- a second radio device (14) acting at least as receiver and adapted to receive the radio signal transmitted by the first radio device (13); and
- a second optical emitter (15), adapted to generate a second focused beam of optical radiations (8c) and send the same towards the optical receiver (6) when the second radio device (14) receives the radio signal transmitted by the first radio device (13);
and **in that** the control system (10) is adapted to determine the intensity of the second beam of radiations (8c) received by the optical receiver (6) and to activate the motorized aligning system (9) when said intensity falls below a threshold indicative of a misalignment between the first optical emitter (5), the optical receiver (6) and the reflecting element (7).

2. Smoke detector (100) according to claim 1, **characterized in that** the first radio device (13) is permanently active and the second radio device (14) is periodically activated.

3. Smoke detector (100) according to claim 1 or 2, **characterized in that** the first optical emitter (5), the optical receiver (6) and the first radio device (13) are powered by an electrical network (12), and the second radio device (14) and the second optical emitter (15) are powered by batteries (16).

4. Smoke detector (100) according to claim 3, **characterized in that**:
- the second radio device (14) has the sole function of receiving;
- the first radio device (13) is adapted to transmit an interrogating radio signal towards the second radio device (14), and
- the second radio device (14), when receiving the interrogating signal, is adapted to control the emission, by the second optical emitter (15), of optical signals representative of the state of charge of the batteries (16).

5. Smoke detector (100) according to claim 3, **characterized in that** the first and the second radio devices (13, 14) have both the transmitting and receiving functions, and the second radio device (14) is adapted to periodically send information on the state of charge of the batteries (16) to the first radio device (13).

6. Method for aligning the components of a smoke detector (100) employing optical radiations and comprising a first optical emitter (5) adapted to generate a first focused beam of optical radiation (8a) and an optical receiver (6) arranged so as to receive the first beam of optical radiations (8a, 8b) which has propagated within an environment (1) in which the detector (100) is arranged and has been reflected by a reflecting element (7), wherein the first optical emitter (5) and the optical receiver (6) belong to a local unit (3) which further comprises a motorized aligning system (9) controlled by a control system (10) and adapted to act onto the first optical emitter (5) and/or onto the optical receiver (6) in order to adjust the alignment between the first optical emitter (5), the optical receiver (6) and the reflecting element (7) and guarantee optimum optical reception, by the optical receiver (6), of the beam (8b) reflected by the reflecting element (7), and wherein the reflecting element (7) belongs to a remote unit (4),
**characterized in that** it comprises the steps of:
- installing, within the local unit (3), a first radio device (13) having at least a transmitting function, in order to generate an aligning radio signal and send the same to the remote unit (4);
- installing, within the remote unit (4), a second radio device (14) having at least a receiving function and adapted to receive the radio signal transmitted by the first radio device (13), and a second optical emitter (15);
and further comprising, in an initial step of alignment of said components, the steps of:
- actuating the first and the second radio devices (13, 14) and the optical receiver (6) while maintaining the first and the second optical emitters (5, 15) in a non-activated state;
- sending an aligning radio signal from the first radio device (13) to the second radio device (14);
- activating the second optical emitter (15) upon reception, by the second radio device (14), of the aligning radio signal;
- sending a second focused beam of radiations from the second optical emitter (15) to the optical receiver (6);
- determining the intensity of the second beam of radiations (8c) received by the optical receiver (6); and
- when said intensity falls below a threshold indicative of a misalignment between the first optical emitter (5), the optical receiver (6) and the reflecting element (7), activating the motorized aligning system (9) in order to modify the position of at least one among the first optical emitter (5) and the optical receiver (6) so as to bring said intensity back to a value above said threshold.

7. Method according to claim 6, **characterized in that** the first radio device (13) is permanently activated and the second radio device (14) is periodically activated.

8. Method according to claim 6 or 7, **characterized in that** it further comprises, at the end of the initial alignment step, the steps of:
- activating the first optical emitter (5) and deactivating the second optical emitter (15) in order to switch to a standard operation of detecting the presence of smoke, and
- during the standard operation, periodically repeating the steps of sending the aligning radio signal, activating the second radio receiver (14) and the second optical emitter, sending the second beam of radiations to the receiver (6), determining the intensity of the second beam of radiations and activating, where appropriate, the alignment system (8) in the event of misalignment.

9. Method according to any of the claims 6 to 8, **characterized in that** the step of installing a second radio device (14) within the remote unit (4) provides to install a radio device having the sole function of receiving, and **in that** the method further comprises the steps of:
- transmitting, from the first radio device (13) to the second radio device (14), an interrogating radio signal interrogating the state of charge of powering batteries of the second radio device (14) and/or of the second optical emitter (15); and
- upon reception, by the second radio device (14), of the aligning radio signal, activating the emission, by the second optical emitter (15), of optical signals representative of the state of charge of said batteries.

10. Method according to any of the claims 6 to 8, **characterized in that** the step of installing a first and a second radio device (13, 14) provides to install radio devices having both the transmitting and receiving functions; and **in that** the method further comprises the step of periodically sending to the first radio device (13), by means of the second radio device (14), radio signals representative of the state of charge of the batteries (16) of the second radio device (14) and/or of the second optical radiation transmission means (15), the step of periodically sending radio signals representative of the state of charge of powering batteries (16) from the second radio device (14) to the first radio device (13) being carried out at intervals that are inversely proportional to the charge of said batteries.

## Patentansprüche

1. Rauchdetektor (100), der optische Strahlung nutzt und einen ersten optischen Emitter (5), der dafür ausgelegt ist, einen ersten fokussierten Strahl optischer Strahlung (8a) zu erzeugen, und einen optischen Empfänger (6), der so angeordnet ist, dass er den ersten Strahl optischer Strahlung (8a, 8b), der sich in einer Umgebung (1), in welcher der Detektor (100) angeordnet ist, ausgebreitet hat und der von einem reflektierenden Element (7) reflektiert wurde, aufweist, wobei der erste optische Emitter (5) und der optische Empfänger (6) zu einer lokalen Einheit (3) gehören, die zudem ein motorisiertes Ausrichtsystem (9) aufweist, das von einem Steuersystem (10) gesteuert wird und dafür ausgelegt ist, auf den ersten optischen Emitter (5) und/oder den optischen Empfänger (6) einzuwirken, um die Ausrichtung zwischen dem ersten optischen Emitter (5) dem optischen Empfänger (6) und dem reflektierenden Element (7) einzustellen und optimalen optischen Empfang des von dem reflektierenden Element (7) reflektierten Strahls (8b) durch den optischen Empfänger (6) zu gewährleisten, und wobei das reflektierende Element (7) zu einer entfernten Einheit (4) gehört,
**dadurch gekennzeichnet, dass** die lokale Einheit (3) zudem eine erste Radiovorrichtung (13) aufweist, die zumindest als Transmitter zum Erzeugen eines ausrichtenden Radiosignals wirkt und dieses zu der entfernten Einheit (4) sendet, wobei die entfernte Einheit (4) zudem ausweist:
- eine zweite Radiovorrichtung (14), die zumindest als Empfänger wirkt und dafür ausgelegt ist, das von der ersten Radiovorrichtung (13) übertragene Radiosignal zu empfangen, und
- einen zweiten optischen Emitter (15), der dafür ausgelegt ist, einen zweiten fokussierten Strahl optischer Strahlung (8c) zu erzeugen und diesen zu dem optischen Empfänger (6) zu senden, wenn die zweite Radiovorrichtung (14) das von der ersten Radiovorrichtung (13) übertragene Radiosignal empfängt,
und dass das Steuersystem (10) dafür ausgelegt ist, die Intensität des zweiten Strahls von Strahlung (8c), der von dem optischen Empfänger (6) empfangen wird, zu bestimmen und das motorisierte Ausrichtsystem (9) zu aktivieren, wenn die Intensität unter eine Schwelle fällt, die auf eine Fehlanpassung zwischen dem ersten optischen Emitter (5), dem optischen Empfänger (6) mit dem reflektierenden Element (7) hindeutet.

2. Rauchdetektor (100) nach Anspruch 1, **dadurch gekennzeichnet, dass** die erste Radiovorrichtung (13) dauernd aktiv ist und die zweite Radiovorrichtung (14) periodisch aktiviert wird.

3. Rauchdetektor (100) nach Anspruch 1 oder 2, **dadurch gekennzeichnet, dass** der erste optische Emitter (5), der optische Empfänger (6) und die erste Radiovorrichtung (13) durch ein elektrisches Netzwerk (12) betrieben werden, und die zweite Radiovorrichtung (14) und der zweite optische Emitter (15) mit Batterien (16) betrieben werden.

4. Rauchdetektor (100) nach Anspruch 3, **dadurch gekennzeichnet, dass**
- die zweite Radiovorrichtung (14) ausschließlich Empfangsfunktion hat,
- die erste Radiovorrichtung (13) dafür ausgelegt ist, ein Abfrageradiosignal an die zweite Radiovorrichtung (14) zu senden, und
- die zweite Radiovorrichtung (14) dafür ausgelegt ist, bei Empfang des Abfragesignals die Emission von optischen Signalen, die den Ladungszustand der Batterien (16) angeben, durch den zweiten optischen Emitter (15) zu steuern.

5. Rauchdetektor (100) nach Anspruch 3, **dadurch gekennzeichnet, dass** die erste und die zweite Radiovorrichtung (13, 14) beide Sende- und Empfangsfunktion haben und die zweite Radiovorrichtung (14) dafür ausgelegt ist, periodisch Informationen über den Ladungszustand der Batterien (16) an die erste Radiovorrichtung (13) zu senden.

6. Verfahren zum Ausrichten der Komponenten eines Rauchdetektors (100), der optische Strahlung nutzt und einen ersten optischen Emitter (5), der dafür ausgelegt ist, einen ersten fokussierten Strahl optischer Strahlung (8a) zu erzeugen, und einen optischen Empfänger (6), der so angeordnet ist, dass er den ersten Strahl optischer Strahlung (8a, 8b), der sich in einer Umgebung (1), in der der Detektor (100) angeordnet ist, ausgebreitet hat und von einem reflektierenden Element (7) reflektiert wurde, aufweist, wobei der erste optische Emitter (5) und der optische Empfänger (6) zu einer lokalen Einheit (3) gehören, die zudem ein motorisiertes Ausrichtsystem (9) aufweist, das von einem Kontrollsystem (10) gesteuert wird und dafür ausgelegt ist, auf den ersten optischen Emitter (5) und/oder den optischen Empfänger (6) einzuwirken, um die Ausrichtung zwischen dem ersten optischen Emitter (5), dem optischen Empfänger (6) und dem reflektierenden Element (7) einzustellen und optimalen optischen Empfang des von dem reflektierenden Element (7) reflektierten Strahls (8b) durch den optischen Empfänger (6) zu gewährleisten, und wobei das reflektierende Element (7) zu einer entfernten Einheit (4) gehört, **gekennzeichnet durch** die Schritte:
- Installieren innerhalb der lokalen Einheit (3) einer ersten Radiovorrichtung (13), die zumindest eine Übertragungsfunktion hat, um ein ausrichtendes Radiosignal zu erzeugen und selbiges an die entfernte Einheit (4) zu senden,
- Installieren innerhalb der entfernten Einheit (4) einer zweiten Radiovorrichtung (14), die zumindest eine empfangende Funktion hat und dafür ausgelegt ist, das von der ersten Radiovorrichtung (13) übertragene Radiosignal zu empfangen, und eines zweiten optischen Emitters (15),
und zudem in einem Anfangsschritt des Ausrichtens der Komponenten die Schritte aufweist:
- Betätigen der ersten und zweiten Radiovorrichtung (13, 14) und des optischen Empfängers (6), während der erste und der zweite optische Emitter (5, 15) einem nicht aktivierten Zustand gehalten werden,
- Aussenden eines ausrichtenden Radiosignals von der ersten Radiovorrichtung (13) an die zweite Radiovorrichtung (14),
- Aktivieren des zweiten optischen Emitters (15) bei Empfang des ausrichtenden Radiosignals durch die zweite Radiovorrichtung (14),
- Senden eines zweiten fokussierten Strahls von Strahlung von dem ersten optischen Emitter (15) an den optischen Empfänger (6),
- Ermitteln der Intensität des zweiten Strahls von Strahlungen (8c), der von dem optischen Empfänger (6) empfangen wurde, und
- wenn die Intensität unter eine Schwelle fällt, die auf eine Fehlanpassung zwischen dem ersten optischen Emitter (5), dem optischen Empfänger (6) und dem reflektierenden Element (7) hindeutet, aktivieren des motorisierten Ausrichtsystems (9), um die Position von wenigstens einem von ersten optischen Emitter (5) und optischen Empfänger (6) anzupassen, um die Intensität zurück auf einen Wert oberhalb des Schwellenwerts zu führen.

7. Verfahren nach Anspruch 6, **dadurch gekennzeichnet, dass** die erste Radiovorrichtung (13) dauerhaft aktiviert ist und die zweite Radiovorrichtung (14) periodisch aktiviert wird.

8. Verfahren nach Anspruch 6 oder 7, **dadurch gekennzeichnet, dass** es zusätzlich zumindest am Ende des anfänglichen Ausrichtschritts die Schritte aufweist:
- Aktivieren des ersten optischen Emitters (5) und Deaktivieren des zweiten optischen Emitters (15), um in einen Standartbetrieb zum Detektieren der Anwesenheit von Rauch umzuschalten, und
- während des Standartbetriebs, periodisches Durchführen der Schritte des Aussendens des ausrichtenden Radiosignals, Aktivieren des zweiten Radioempfängers (14) und des zweiten optischen Emitters, Aussenden des zweiten Strahls von Strahlung an den Empfänger (6) sendet, Bestimmen der Intensität des zweiten Strahls von Strahlungen und Aktivieren, wo angebracht, des Ausrichtsystems (8) im Fall einer Fehlanpassung.

9. Verfahren nach einem der Ansprüche 6 bis 8, **dadurch gekennzeichnet, dass** der Schritt des Installierens einer zweiten Radiovorrichtung (14) in der entfernten Einheit (4) vorsieht, eine Radiovorrichtung zu installieren, deren einzige Funktion im Empfangen besteht, und das Verfahren zudem die Schritte ausweist:
- Übertragen eines Abfrageradiosignals von der ersten Radiovorrichtung (13) an die zweite Radiovorrichtung (14), das den Ladungszustand der versorgenden Batterien der zweiten Radiovorrichtung (14) und/oder des zweiten optischen Emitters (15) abfragt, und
- bei Empfang des ausrichtenden Radiosignals durch die zweite Radiovorrichtung (14) Aktivieren der Aussendung von optischen Signalen, die den Leitungszustand der Batterien angeben, durch den zweiten optischen Emitter (15).

10. Verfahren nach einem der Ansprüche 6 bis 8, **dadurch gekennzeichnet, dass** der Schritt des Installierens einer erste und einer zweiten Radiovorrichtung (13, 14) vorsieht, Radiovorrichtungen zu installieren, die sowohl Übertragungs- als auch Empfangsfunktion haben, und dass das Verfahren zudem den Schritt aufweist, periodisch mittels der zweiten Radiovorrichtung (14) an die erste Radiovorrichtung (13) Radiosignale zu senden, die den Ladungszustand der Batterien (16) der zweiten Radiovorrichtung (14) und/oder der zweiten optischen Strahlungsübertragungsmittel (15) angeben, wobei der Schritt des periodischen Aussendens von Radiosignalen, die den Ladungszustand der stromversorgenden Batterien (16) angeben, von der zweiten Radiovorrichtung (14) an die erste Radiovorrichtung (13) in Intervallen ausgeführt werden, die umgekehrt proportional zur Ladung der Batterien sind.

## Revendications

1. Détecteur de fumée (100) employant des rayonnements optiques et comprenant un premier émetteur optique (5) adapté pour générer un premier faisceau focalisé de rayonnements optiques (8a) et un récepteur optique (6) agencé de façon à recevoir le premier faisceau de rayonnements optiques (8a, 8b), qui s'est propagé au sein d'un environnement (1) dans lequel est agencé le détecteur (100), et a été réfléchi par un élément réfléchissant (7), dans lequel le premier émetteur optique (5) et le récepteur optique (6) appartiennent à une unité locale (3) qui comprend en outre un système d'alignement motorisé (9) commandé par un système de commande (10) et adapté pour agir sur le premier émetteur optique (5) et/ou sur le récepteur optique (6) afin d'ajuster l'alignement entre le premier émetteur optique (5), le récepteur optique (6) et l'élément réfléchissant (7) et garantir une réception optique optimale, par le récepteur optique (6), du faisceau (8b) réfléchi par l'élément réfléchissant (7), et dans lequel l'élément réfléchissant (7) appartient à une unité distante (4),
**caractérisé en ce que** l'unité locale (3) comprend en outre un premier dispositif radio (13) servant au moins de transmetteur pour générer un signal radio d'alignement et envoyer celui-ci vers l'unité distante (4), et l'unité distante (4) comprend en outre :
un second dispositif radio (14) servant au moins de récepteur et adapté pour recevoir le signal radio transmis par le premier dispositif radio (13) ; et
un second émetteur optique (15), adapté pour générer un second faisceau focalisé de rayonnements optiques (8c) et envoyer celui-ci vers le récepteur optique (6) lorsque le second dispositif radio (14) reçoit le signal radio transmis par le premier dispositif radio (13) ;
et **en ce que** le système de commande (10) est adapté pour déterminer l'intensité du second faisceau de rayonnements (8c) reçu par le récepteur optique (6) et pour activer le système d'alignement motorisé (9) lorsque ladite intensité tombe sous un seuil indicatif d'un désalignement entre le premier émetteur optique (5), le récepteur optique (6) et l'élément réfléchissant (7).

2. Détecteur de fumée (100) selon la revendication 1, **caractérisé en ce que** le premier dispositif radio (13) est actif en permanence et le second dispositif radio (14) est activé périodiquement.

3. Détecteur de fumée (100) selon la revendication 1 ou 2, **caractérisé en ce que** le premier émetteur optique (5), le récepteur optique (6) et le premier dispositif radio (13) sont alimentés par un réseau électrique (12), et le second dispositif radio (14) et le second émetteur optique (15) sont alimentés par des batteries (16).

4. Détecteur de fumée (100) selon la revendication 3, **caractérisé en ce que** :
le second dispositif radio (14) a la seule fonction de réception ;
le premier dispositif radio (13) est adapté pour transmettre un signal radio d'interrogation vers le second dispositif radio (14), et
le second dispositif radio (14), lorsqu'il reçoit le signal d'interrogation, est adapté pour commander l'émission, par le second émetteur optique (15), de signaux optiques représentatifs de l'état de charge des batteries (16).

5. Détecteur de fumée (100) selon la revendication 3, **caractérisé en ce que** les premier et second dispositifs radio (13, 14) ont les deux fonctions de transmission et de réception, et le second dispositif radio (14) est adapté pour envoyer périodiquement des informations sur l'état de charge des batteries (16)au premier dispositif radio (13).

6. Procédé d'alignement des composants d'un détecteur de fumée (100) employant des rayonnements optiques et comprenant un premier émetteur optique (5) adapté pour générer un premier faisceau focalisé de rayonnement optique (8a) et un récepteur optique (6) agencé de façon à recevoir le premier faisceau de rayonnements optiques (8a, 8b) qui s'est propagé au sein d'un environnement (1) dans lequel est agencé le détecteur (100) et a été réfléchi par un élément réfléchissant (7), dans lequel le premier émetteur optique (5) et le récepteur optique (6) appartiennent à une unité locale (3) qui comprend en outre un système d'alignement motorisé (9) commandé par un système de commande (10) et adapté pour agir sur le premier émetteur optique (5) et/ou sur le récepteur optique (6) afin d'ajuster l'alignement entre le premier émetteur optique (5), le récepteur optique (6) et l'élément réfléchissant (7) et garantir une réception optique optimale, par le récepteur optique (6), du faisceau (8b) réfléchi par l'élément réfléchissant (7), et dans lequel l'élément réfléchissant (7) appartient à une unité distante (4),
**caractérisé en ce qu'**il comprend les étapes de :
installation, au sein de l'unité locale (3), d'un premier dispositif radio (13) ayant au moins une fonction de transmission, afin de générer un signal radio d'alignement et envoyer celui-ci à l'unité distante (4) ;
installation, au sein de l'unité distante (4), d'un second dispositif radio (14) ayant au moins une fonction de réception et adapté pour recevoir le signal radio transmis par le premier dispositif radio (13), et un second émetteur optique (15) ;
et comprenant en outre, dans une étape initiale d'alignement desdits composants, les étapes de :
actionnement du premier et du second dispositif radio (13, 14) et du récepteur optique (6) tout en maintenant le premier et le second émetteur optique (5, 15) dans un état non activé ;
envoi d'un signal radio d'alignement du premier dispositif radio (13) au second dispositif radio (14) ;
activation du second émetteur optique (15) lors de la réception, par le second dispositif radio (14), du signal radio d'alignement ;
envoi d'un second faisceau focalisé de rayonnements du second émetteur optique (15) au récepteur optique (6) ;
détermination de l'intensité du second faisceau de rayonnements (8c) reçu par le récepteur optique (6) ; et
- lorsque ladite intensité tombe sous un seuil indicatif d'un désalignement entre le premier émetteur optique (5), le récepteur optique (6) et l'élément réfléchissant (7), activation du système d'alignement motorisé (9) afin de modifier la position d'au moins l'un parmi le premier émetteur optique (5) et le récepteur optique (6) de façon à ramener ladite intensité à une valeur au-dessus dudit seuil.

7. Procédé selon la revendication 6, **caractérisé en ce que** le premier dispositif radio (13) est activé en permanence et le second dispositif radio (14) est activé périodiquement.

8. Procédé selon la revendication 6 ou 7, **caractérisé en ce qu'**il comprend en outre, à l'issue de l'étape d'alignement initial, les étapes de :
activation du premier émetteur optique (5) et désactivation du second émetteur optique (15) afin de passer à une opération type de détection de la présence de fumée, et
pendant l'opération type, répétition périodique des étapes d'envoi du signal radio d'alignement, d'activation du second récepteur radio (14) et du second émetteur optique, d'envoi du second faisceau de rayonnements au récepteur (6), de détermination de l'intensité du second faisceau de rayonnements et d'activation, le cas échéant, du système d'alignement (8) en cas de désalignement.

9. Procédé selon l'une quelconque des revendications 6 à 8, **caractérisé en ce que** l'étape d'installation d'un second dispositif radio (14) au sein de l'unité distante (4) prévoit d'installer un dispositif radio ayant la seule fonction de réception, et **en ce que** le procédé comprend en outre les étapes de :
transmission, du premier dispositif radio (13) au second dispositif radio (14), d'un signal radio d'interrogation interrogeant l'état de charge de batteries d'alimentation du second dispositif radio (14) et/ou du second émetteur optique (15) ; et
lors de la réception, par le second dispositif radio (14), du signal radio d'alignement, activation de l'émission, par le second émetteur optique (15), de signaux optiques représentatifs de l'état de charge desdites batteries.

10. Procédé selon l'une quelconque des revendications 6 à 8, **caractérisé en ce que** l'étape d'installation d'un premier et d'un second dispositif radio (13, 14) prévoit d'installer des dispositifs radio ayant à la fois les fonctions de transmission et de réception ; et **en ce que** le procédé comprend en outre l'étape d'envoi périodique au premier dispositif radio (13), au moyen du second dispositif radio (14), de signaux radio représentatifs de l'état de charge des batteries (16)du second dispositif radio (14) et/ou du second moyen de transmission (15) de rayonnement optique, l'étape d'envoi périodique de signaux radio représentatifs de l'état de charge de batterie (16) d'alimentation du second dispositif radio (14) au premier dispositif radio (13) étant réalisée à des intervalles qui sont inversement proportionnels à la charge desdites batteries.
